# EUROPÄISCHE PATENTSCHRIFT

(11) **EP 3 204 243 B1**
(45) Veröffentlichungstag und Bekanntmachung des Hinweises auf die Patenterteilung: **11.09.2019**
(21) Anmeldenummer: 15736273.2
(22) Anmeldetag: 10.07.2015
(51) Int. Cl.: B60C 11/13

(54) **FAHRZEUGLUFTREIFEN**
VEHICLE TIRES
BANDAGE PNEUMATIQUE DE VÉHICULE

(30) Priorität: 06.10.2014 DE 102014220147
(43) Veröffentlichungstag der Anmeldung: 16.08.2017
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2015/065825
(87) Internationale Veröffentlichungsnummer: WO 2016/055173

(56) Entgegenhaltungen:
- WO-A1-2011/062595
- JP-A- 2002 036 824

## Beschreibung

Die Erfindung betrifft einen Fahrzeugluftreifen in Radialbauart mit einem Laufstreifen mit zumindest einem sich in Umfangsrichtung erstreckenden Profilpositiv, wie einer Blockreihe oder einem Profilband, welches mit einer Vielzahl von Querrillen versehen ist, wobei jede Querrille durch zwei einander gegenüberliegende Rillenflanken und einen die Rillenflanken verbindenden Rillengrund begrenzt ist und wobei eine dieser Rillenflanken über eine als ebene Schrägfläche ausgebildete Fase in die Laufstreifenoberfläche übergeht.

Es ist bekannt und üblich, in Laufstreifen zusätzlich zu Umfangsrillen Querrillen vorzusehen, wodurch Querkanten zur Verfügung gestellt werden, welche vor allem die Traktion, das Bremsvermögen und die Wasserableitung des Reifens verbessern. Ferner ist es bekannt, bei Querrillen die Übergänge ihrer Rillenflanken zur Laufstreifenoberfläche abgerundet auszuführen oder mit einer Fase, einer schmalen Schrägfläche, zu versehen. Derartige Fasen sind in unterschiedlichen Ausführungen bekannt und können die Trockenbremseigenschaften von Reifen verbessern.

Aus der DE 10 2012 101 760 A1 ist ein Laufstreifenprofil bekannt, in dessen Umfangsrillen nahe der Laufstreifenoberfläche über den Umfang des Reifens verteilte Auswölbungen ausgebildet sind. Die Auswölbungen sind durch einen in radialer Richtung ausgebildeten dünnen Einschnitt vom Profilband entkoppelt, wobei die Tiefe des Einschnittes die Tiefe der Umfangsrille nicht übersteigt. Die radial äußere Oberfläche der Auswölbung ist beispielsweise entlang eines Kreisbogens gekrümmt ausgeführt. Die eigentlichen Rillenflanken verlaufen gerade und in radialer Richtung. Ein solcher Laufstreifen soll kurze Verdrängungswege für Wasser und einen geringen Rollwiderstand aufweisen. Die genannte Auswölbung soll eine stützende Wirkung gegen Kippen bewirken und die Kraftübertragung im Handling optimieren, wodurch ein besonders gleichmäßiger Laufstreifenabrieb auftreten soll.

Aus der DE 44 16 435 A1 ist ein Fahrzeugluftreifen mit Umfangsrillen im Laufstreifen bekannt, wobei die Rillenflanken der Umfangsrillen im Wesentlichen in Umfangsrichtung ausgerichtet und über den Umfang verteilte axiale Versetzungen aufweisen. Bei einer möglichen Ausführungsform sind beide Rillenflanken der Umfangsrillen gekrümmt, wobei die Krümmung derart ausgeführt ist, dass die Winkel, welche an den Krümmungsverlauf angelegte Tangenten mit der radialen Richtung einschließen, mit zunehmendem radialen Abstand vom Rillengrund größer werden, wodurch die Stabilität des Laufstreifens verbessert werden soll. Ein derart gestalteter Fahrzeugluftreifen soll gute Nassgriffeigenschaften und ein gutes Fahrverhalten auf Schnee aufweisen.

Aus der JP 2002 036 824 A ist ein Fahrzeugluftreifen mit einem Laufstreifen mit speziell gestaltete Blockeckbereiche aufweisenden Blöcken bekannt. An den Blockeckbereichen sind die Blöcke, im Querschnitt betrachtet, zur Laufstreifenoberfläche abgeschrägt oder abgerundet ausgeführt. Dadurch sollen die Blöcke beim Abrollen des Reifens unter gleichmäßiger Belastung stehen, wobei Druckspitzen an den Blockeckbereichen vermieden werden.

Wie oben erwähnt können zur Verbesserung der Trockenbremseigenschaften die Übergänge der Rillenflanken von Querrillen zur Außenfläche des Laufstreifens gefast ausgeführt sein. Allerdings verursachen die Fasen Verwirbelungen des einströmenden Wassers, was sich negativ auf die Bremseigenschaften auf nasser Fahrbahn auswirken kann. Bei den bekannten Querrillen besteht daher ein gewisser Zielkonflikt zwischen guten Nassbrems - und guten Trockenbremseigenschaften.

Der Erfindung liegt die Aufgabe zugrunde, Querrillen eines Laufstreifens eines Fahrzeugluftreifens derart zu gestalten, dass die Bremseigenschaften sowohl auf nasser als auch auf trockner Fahrbahn verbessert sind.

Gelöst wird die gestellte Aufgabe erfindungsgemäß dadurch, dass zumindest über den Großteil der Längserstreckung der Querrille die an die Fase anschließende Rillenflanke zumindest in ihrem an die Fase anschließenden Abschnitt im Querschnitt konkav gekrümmt, in Richtung der Querrille hervorstehend, ausgeführt ist, wobei zwischen der Fase und der Rillenflanke ein knickfreier Übergang vorliegt.

In erfindungsgemäß ausgeführte Querrillen kann auf nasser Fahrbahn Wasser besonders gleichmäßig und mit geringen Verwirbelungen einströmen. Dadurch werden die Bremseigenschaften auf nasser Fahrbahn bei Erhalt von guten Bremseigenschaften auf trockener Fahrbahn verbessert.

Bei einer bevorzugten, effektiven und einfach zu realisierenden Ausführungsform der Erfindung verläuft der konkav gekrümmte Flankenabschnitt, im Querschnitt betrachtet, entlang eines Kreisbogens gekrümmt, wobei der dem Kreisbogen zugrundeliegende Kreis einen Radius von 2,5 mm bis 5,0 mm, insbesondere von 3,0 mm bis 4,0 mm, aufweist.

Bei dieser Ausführungsform der Erfindung ist der konkav gekrümmte Flankenabschnitt über einen weiteren Flankenabschnitt mit dem Rillengrund verbunden, welcher, im Querschnitt betrachtet, gerade und in radialer Richtung bzw. zur radialen Richtung unter einem spitzen Winkel, welcher vorzugsweise bis zu 7° beträgt, geneigt verläuft.

Bei einer weiteren besonders bevorzugten Ausführungsform verläuft die Rillenflanke im Querschnitt mit kurvenstetigem Verlauf entlang eines Splines. Durch die derart gegebene fortlaufende Krümmung der Rillenflanke kann Wasser auch bei höheren Fahrgeschwindigkeiten unter besonders geringer Wirbelausbildung in die Querrillen einströmen.

Bevorzugter Weise verläuft die Fase, im Querschnitt betrachtet, unter einem Winkel von 30° bis 65° gegenüber der axialen Richtung geneigt. Derart ausgeführte Fasen begünstigen das Einströmen von Wassers in die Querrillen und unterstützen die Bremseigenschaften auf trockener Fahrbahn.

Weitere Merkmale, Vorteile und Einzelheiten der Erfindung werden nun anhand der Zeichnung, in der zwei Ausführungsformen der Erfindung dargestellt sind, näher erläutert.

Dabei zeigen
Fig. 1 eine vereinfachte Draufsicht auf einen Ausschnitt eines Laufstreifens eines Fahrzeugluftreifens, welcher erfindungsgemäß ausgeführte Querrillen aufweist,
Fig. 2 einen Querschnitt durch ein Querrille entlang der Linie II-II der Fig. 1 und
Fig. 3 einen Querschnitt durch eine weitere Querrille entlang der Linie III-III der Fig. 1.

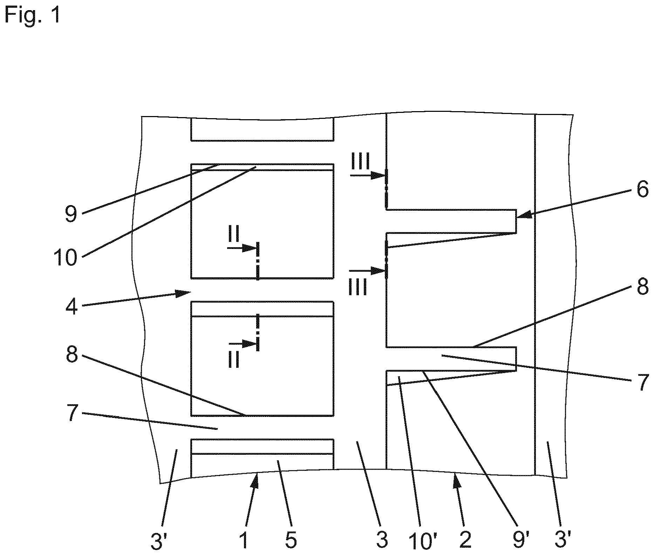

In dem in Fig. 1 dargestellten Laufstreifenausschnitt sind eine Blockreihe 1 und ein Profilband 2, welche voneinander durch eine Umfangsrille 3 getrennt und von weiteren Umfangsrillen 3' begrenzt sind, dargestellt.

Zwischen den die Blockreihe 1 begrenzenden Umfangsrillen 3, 3' verlaufen mehrerer Querrillen 4, welche, wie an sich bekannt, im Wesentlichen in axialer Richtung bzw. unter einem von der axialen Richtung bis zu 45° abweichenden spitzen Winkel verlaufen können und die Blockreihe 1 in mehrere Blöcke 5 gliedern. Derartige Querrillen 4 weisen meist über ihren Verlauf einen im Wesentlichen gleichbleibenden Querschnitt auf. Das Profilband 2 weist von der einen Umfangsrille 3 ausgehende Querrillen 6 auf, welche innerhalb des Profilbandes 2 und daher in einem axialen Abstand vor der Umfangsrille 3' enden bzw. auslaufen und vorzugsweise gegenüber den Querrillen 4 in Umfangsrichtung versetzt angeordnet sind.

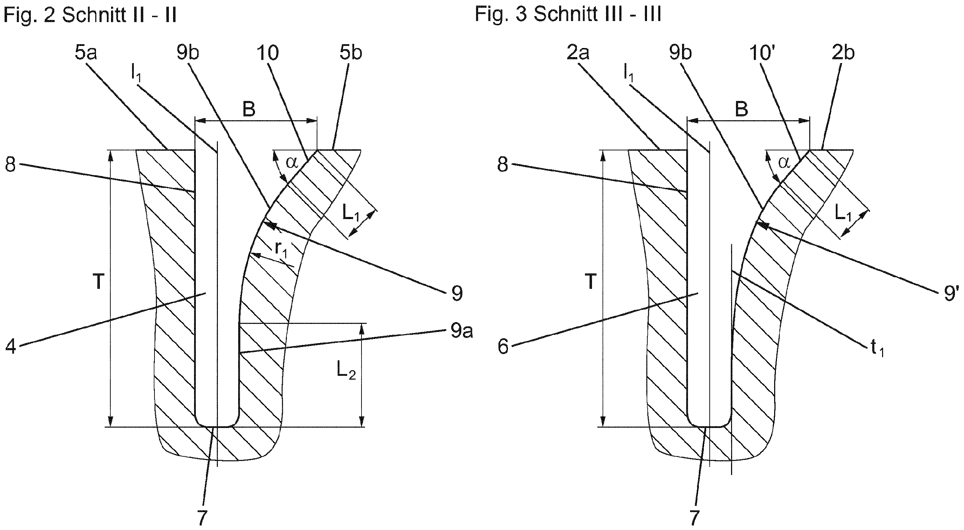

Die Querrillen 4, 6 sind, wie insbesondere Fig. 2 und Fig. 3 zeigen, durch je einen Rillengrund 7 und zwei Rillenflanken 8, 9 bzw. 9' begrenzt. Die Querrillen 4, 6 weisen eine zwischen der Rillenflanke 9, 9' und der Laufstreifenoberfläche ausgebildete Fase 10, 10' auf. Derartige Fasen 10, 10' sind ebene Schrägflächen, welche, wie in Fig. 2 und Fig. 3 dargestellt, unter einem bestimmten konstanten Winkel α von vorzugsweise 30° bis 65° zur radialen Richtung verlaufen. In den Querrillen 6 wird die Fase 10' bis zum innerhalb des Profilbandes 2 befindlichen Rillenende kontinuierlich schmäler, sodass die Fase 10' am Rillenende mit der Rillenflanke 9' zusammenläuft.

Weitere geometrische Details werden nun anhand der beiden Ausführungsvarianten in den Schnittdarstellungen näher erläutert. Fig. 3 zeigt dabei einen Querschnitt bei der Einmündung der Querrille 6 in die Umfangsrille 3.

In Fig. 2 sind die Außenflächen der Blöcke 5 mit 5a, 5b bezeichnet, in Fig. 3 die Außenflächen des Profilbandes mit 2a, 2b. Die Querrillen 4, 6 sind bezüglich einer in radialer Richtung und durch die Mitte des Rillengrundes 7 verlaufenden Linie l₁ asymmetrisch ausgeführt, weisen an den Außenflächen 5a, 5b bzw. 2a, 2b eine Breite B von insbesondere 2,0 mm bis 5,0 mm auf und reichen bis in eine Tiefe T, welche ausgehend von den Außenflächen 5a, 5b bzw. 2a, 2b in radialer Richtung ermittelt wird und insbesondere 5,0 mm bis 8,0 mm beträgt.

Der Rillengrund 7 kann gerundet ausgeführt sein oder zumindest gerundete Übergangsbereiche zu den Rillenflanken 8, 9, 9' aufweisen. Die Rillenflanke 8 verläuft vom Rillengrund 7 zur Außenfläche 5a bzw. 2a in radialer Richtung oder unter einem kleinen spitzen Winkel β von einigen Grad, insbesondere bis zu 7°, zur radialen Richtung. Der Übergang der Rillenflanke 8 zur Außenfläche 5a, 2a ist insbesondere scharfkantig ausgeführt.

Die Fasen 10, 10'weisen im Querschnitt jeweils eine Erstreckungslänge L₁ auf, welche mindestens 0,5 mm und maximal ein Drittel der Tiefe T beträgt.

Bei der in Fig. 3 gezeigten Ausführungsform ist die der Rillenflanke 8 gegenüberliegende Rillenflanke 9' insgesamt konkav gekrümmt, bei der in Fig. 2 gezeigten Ausführungsform ist der an die Fase 10 anschließenden Abschnitt 9b der Rillenflanke 9 konkav gekrümmt ausgeführt. Zwischen der Fase 10, 10' und der Rillenflanke 9, 9' besteht dabei ein knickfreier Übergang. Unter Krümmung wird der Kehrwert des Radius jenes Kreises verstanden, welcher an jeder gekrümmten Stelle der Rillenflanke 9 dem Krümmungsverlauf am besten angenähert ist.

Bei dem in Fig. 2 gezeigten Ausführungsbeispiel setzt sich die Rillenflanke 9 daher aus einem an den Rillengrund 7 angrenzenden inneren Flankenabschnitt 9a und dem an diesen in radialer Richtung anschließenden gekrümmten Flankenabschnitt 9b, welcher in die Fase 10 übergeht, zusammen. Der innere Flankenabschnitt 9a weist eine Erstreckungslänge L₂ auf, welche mindestens 2,0 mm und maximal die Hälfte der Tiefe T beträgt, verläuft im Querschnitt gerade und entweder in radialer Richtung oder gegenüber der radialen Richtung unter einem kleinen spitzen Winkel β' geneigt, sodass der axiale Abstand des Flankenabschnittes 9a zur Linie l₁ in Richtung Laufstreifenoberfläche größer wird. Der Winkel β' beträgt insbesondere bis zu 7° und ist vorzugsweise gleich groß wie der Neigungswinkel β der Rillenflanke 8.

Der gekrümmte Flankenabschnitt 9b ist im Querschnitt entlang eines Kreisbogens gekrümmt, wobei der dem Kreisbogen zugrundeliegende Kreis einen Radius r₁ von 2,5 mm bis 5,0 mm, insbesondere von 3,0 mm bis 4,0 mm, aufweist. Die Länge des Kreisbogens des gekrümmten Flankenabschnittes 9b ist an die relativ zur radialen Richtung gewählte Neigung des inneren Flankenabschnittes 9a und an die Neigung der Fase 10 angepasst, sodass auch zwischen dem gekrümmten Flankenabschnitt 9b und dem inneren Flankenabschnitt 9a ein knickfreier Übergang sichergestellt ist. Der innere Flankenabschnitt 9a und die Fase 10 schließen dabei tangential an den Verlauf des gekrümmten Flankenabschnittes 9b an.

Bei der in Fig. 3 gezeigten Ausführungsform erfolgt die Krümmung der Rillenflanke 9' mit kurvenstetigem Verlauf entlang eines Splines, wobei eine Tangente t₁, welche an die Rillenflanke 9' angelegt ist und durch den Übergangspunkt zwischen der Rillenflanke 9' und dem Rillengrund 7 verläuft, in radialer Richtung ausgerichtet ist. Abweichend davon kann die Rillenflanke 9' auch derart verlaufen, dass die Tangente t₁ unter dem Winkel β' gegenüber der radialen Richtung geneigt verläuft.

### Bezugsziffernliste

- 1: Blockreihe
- 2: Profilband
- 2a, 2b: Außenfläche
- 3, 3': Umfangsrille
- 4: Querrille
- 5: Block
- 5a, 5b: Außenfläche
- 6: Querrille
- 7: Rillengrund
- 8: Rillenflanke
- 9, 9': Rillenflanke
- 9a: Flankenabschnitt
- 9b: Flankenabschnitt
- 10, 10': Fase
- B: Breite
- T: Tiefe
- L₁, L₂: Erstreckungslänge
- α, β, β': Winkel
- l₁: Linie
- t₁: Tangente

## Patentansprüche

1. Fahrzeugluftreifen in Radialbauart mit einem Laufstreifen mit zumindest einem sich in Umfangsrichtung erstreckenden Profilpositiv, wie einer Blockreihe (1) oder einem Profilband (2), welches mit einer Vielzahl von Querrillen (4, 6) versehen ist, wobei jede Querrille (4, 6) durch zwei einander gegenüberliegende Rillenflanken (8, 9, 9') und einen die Rillenflanken (8, 9, 9') verbindenden Rillengrund (7) begrenzt ist und wobei eine dieser Rillenflanken (9, 9') über eine als ebene Schrägfläche ausgebildete Fase (10, 10') in die Laufstreifenoberfläche übergeht,
**dadurch gekennzeichnet,**
**dass** zumindest über den Großteil der Längserstreckung der Querrille (4, 6) die an die Fase (10, 10') anschließende Rillenflanke (9, 9') zumindest in ihrem an die Fase (10, 10') anschließenden Abschnitt (9b) im Querschnitt konkav gekrümmt, in Richtung der Querrille (4, 6) hervorstehend, ausgeführt ist, wobei zwischen der Fase (10, 10') und der Rillenflanke (9, 9') ein knickfreier Übergang vorliegt.

2. Fahrzeugluftreifen nach Anspruch 1, **dadurch gekennzeichnet, dass** der konkav gekrümmte Flankenabschnitt (9b), im Querschnitt betrachtet, entlang eines Kreisbogens gekrümmt verläuft.

3. Fahrzeugluftreifen nach Anspruch 2, **dadurch gekennzeichnet, dass** der dem Kreisbogen zugrundeliegende Kreis einen Radius (r₁) von 2,5 mm bis 5,0 mm, insbesondere von 3,0 mm bis 4,0 mm, aufweist.

4. Fahrzeugluftreifen nach einem der Ansprüche 1 bis 3, **dadurch gekennzeichnet, dass** der konkav gekrümmte Flankenabschnitt (9b) über einen weiteren Flankenabschnitt (9a) mit dem Rillengrund (7) verbunden ist, welcher, im Querschnitt betrachtet, gerade und in radialer Richtung bzw. zur radialen Richtung unter einem spitzen Winkel (β'), welcher vorzugsweise bis zu 7° beträgt, geneigt verläuft.

5. Fahrzeugluftreifen nach Anspruch 4, **dadurch gekennzeichnet, dass** der weitere Flankenabschnitt (9a), im Querschnitt betrachtet, in radialer Richtung eine Erstreckungslänge (L₂) von mindestens 2,0 mm und maximal der Hälfte der Tiefe (T) der Querrille (4) aufweist.

6. Fahrzeugluftreifen nach Anspruch 1, **dadurch gekennzeichnet, dass** die an die Fase (10') anschließende Rillenflanke (9') bis zum Rillengrund (7) konkav gekrümmt ausgeführt ist.

7. Fahrzeugluftreifen nach Anspruch 1 oder 6, **dadurch gekennzeichnet, dass** die Rillenflanke (9') im Querschnitt mit kurvenstetigem Verlauf entlang eines Splines verläuft.

8. Fahrzeugluftreifen nach Anspruch 6 oder 7, **dadurch gekennzeichnet, dass** eine Tangente (t₁), welche an den Verlauf der konkav gekrümmten Rillenflanke (9') angelegt ist und durch den Punkt geht, in welchem die Rillenflanke (9') an den Rillengrund (7) anschließt, in radialer Richtung ausgerichtet ist.

9. Fahrzeugluftreifen nach Anspruch 6 oder 7, **dadurch gekennzeichnet, dass** eine Tangente (t₁), welche an den Verlauf der konkav gekrümmten Rillenflanke (9') angelegt ist und durch den Punkt geht, in welchem die Rillenflanke (9) an den Rillengrund (7) anschließt, gegenüber der radialen Richtung unter einem kleinen spitzen Winkel (β') geneigt verläuft.

10. Fahrzeugluftreifen nach einem der Ansprüche 1 bis 9, **dadurch gekennzeichnet, dass** die Fase (10, 10'), im Querschnitt betrachtet, unter einem Winkel (α) von 30° bis 65° gegenüber der axialen Richtung geneigt verläuft.

## Claims

1. Pneumatic vehicle tyre of radial construction, having a tread with at least one profile positive extending in a circumferential direction, such as a block row (1) or a profile strip (2), which is provided with a multiplicity of transverse grooves (4, 6), wherein each transverse groove (4, 6) is delimited by two mutually opposite groove flanks (8, 9, 9') and a groove base (7) connecting the groove flanks (8, 9, 9'), and wherein one of these groove flanks (9, 9') transitions into the tread surface via a chamfer (10, 10') in the form of a planar sloping surface,
**characterized**
**in that**, at least along the majority of the longitudinal extent of the transverse groove (4, 6), the groove flank (9, 9') adjoining the chamfer (10, 10') is embodied, at least in its portion (9b) adjoining the chamfer (10, 10'), in a concavely curved manner in cross section, protruding in the direction of the transverse groove (4, 6), wherein there is a bend-free transition between the chamfer (10, 10') and the groove flank (9, 9').

2. Pneumatic vehicle tyre according to Claim 1, **characterized in that** the concavely curved flank portion (9b), as seen in cross section, extends in a manner curved about a circular arc.

3. Pneumatic vehicle tyre according to Claim 2, **characterized in that** the circle on which the circular arc is based has a radius (r₁) of 2.5 mm to 5.0 mm, in particular of 3.0 mm to 4.0 mm.

4. Pneumatic vehicle tyre according to one of Claims 1 to 3, **characterized in that** the concavely curved flank portion (9b) is connected via a further flank portion (9a) to the groove base (7), which, as seen in cross section, extends in a straight manner and in a radial direction or in a manner inclined at an acute angle (β'), which is preferably up to 7°, to the radial direction.

5. Pneumatic vehicle tyre according to Claim 4, **characterized in that** the further flank portion (9a), as seen in cross section, has an extension length (L₂), in the radial direction, of at least 2.0 mm and at most half the depth (T) of the transverse groove (4).

6. Pneumatic vehicle tyre according to Claim 1, **characterized in that** the groove flank (9') adjoining the chamfer (10') is embodied in a concavely curved manner as far as the groove base (7) .

7. Pneumatic vehicle tyre according to Claim 1 or 6, **characterized in that** the groove flank (9') extends with a profile of consistent curve in cross section along a spline.

8. Pneumatic vehicle tyre according to Claim 6 or 7, **characterized in that** a tangent (t₁) that is applied to the profile of the concavely curved groove flank (9') and passes through the point at which the groove flank (9') adjoins the groove base (7) is oriented in a radial direction.

9. Pneumatic vehicle tyre according to Claim 6 or 7, **characterized in that** a tangent (t₁) that is applied to the profile of the concavely curved groove flank (9') and passes through the point at which the groove flank (9) adjoins the groove base (7) extends in a manner inclined at a small acute angle (β') to the radial direction.

10. Pneumatic vehicle tyre according to one of Claims 1 to 9, **characterized in that** the chamfer (10, 10'), as seen in cross section, extends in a manner inclined at an angle (α) of 30° to 65° to the axial direction.

## Revendications

1. Pneumatique de véhicule de type radial avec une bande de roulement avec un positif de profil s'étendant en direction périphérique, comme une rangée de blocs (1) ou une bande de profil (2), qui est doté d'une multiplicité de rainures transversales (4, 6), dans lequel chaque rainure transversale (4, 6) est limitée par deux flancs de rainure (8, 9, 9') opposés l'un à l'autre et par un fond de rainure (7) reliant les flancs de rainure (8, 9, 9') et dans lequel un de ces flancs de rainure (9, 9') se prolonge dans la surface de la bande de roulement par l'intermédiaire d'un chanfrein (10, 10') formé par une face oblique plane,
**caractérisé en ce que** le flanc de rainure (9, 9') se raccordant au chanfrein (10, 10') est réalisé au moins sur la grande partie de l'extension longitudinale de la rainure transversale (4, 6) sous forme incurvée de façon concave en section transversale au moins dans sa partie (9b) se raccordant au chanfrein (10, 10'), en saillie en direction de la rainure transversale (4, 6), dans lequel il existe une transition sans coude entre le chanfrein (10, 10') et le flanc de rainure (9, 9').

2. Pneumatique de véhicule selon la revendication 1, **caractérisé en ce que** la partie de flanc à courbure concave (9b), vue en section transversale, s'étend en courbe le long d'un arc de cercle.

3. Pneumatique de véhicule selon la revendication 2, **caractérisé en ce que** le cercle générant l'arc de cercle présente un rayon (r₁) de 2,5 mm à 5,0 mm, en particulier de 3,0 mm à 4,0 mm.

4. Pneumatique de véhicule selon l'une quelconque des revendications 1 à 3, **caractérisé en ce que** la partie de flanc à courbure concave (9b) est reliée au fond de rainure (7) par une autre partie de flanc (9a) qui, considérée en section transversale, est rectiligne et s'étend en direction radiale ou est inclinée par rapport à la direction radiale d'un angle aigu (□'), qui vaut de préférence jusque 7°.

5. Pneumatique de véhicule selon la revendication 4, **caractérisé en ce que** l'autre partie de flanc (9a), considérée en section transversale, présente en direction radiale une longueur d'extension (L₂) d'au moins 2,0 mm et d'au plus la moitié de la profondeur (T) de la rainure transversale (4).

6. Pneumatique de véhicule selon la revendication 1, **caractérisé en ce que** le flanc de rainure (9') se raccordant au chanfrein (10') est réalisé avec une courbure concave jusqu'au fond de rainure (7).

7. Pneumatique de véhicule selon une revendication 1 ou 6, **caractérisé en ce que** le flanc de rainure (9') s'étend en section transversale avec une allure courbe constante le long d'une spline.

8. Pneumatique de véhicule selon une revendication 6 ou 7, **caractérisé en ce qu'**une tangente (t₁), qui est tracée sur l'allure du flanc de rainure à courbure concave (9') et qui passe par le point où le flanc de rainure (9') se raccorde au fond de rainure (7), est orientée en direction radiale.

9. Pneumatique de véhicule selon une revendication 6 ou 7, **caractérisé en ce qu'**une tangente (t₁), qui est tracée sur l'allure du flanc de rainure à courbure concave (9') et qui passe par le point où le flanc de rainure (9) se raccorde au fond de rainure (7), est inclinée d'un petit angle aigu (□') par rapport à la direction radiale.

10. Pneumatique de véhicule selon l'une quelconque des revendications 1 à 9, **caractérisé en ce que** le chanfrein (10, 10'), considéré en section transversale, est incliné d'un angle (□) de 30° à 65° par rapport à la direction axiale.
